# FASCICULE DE BREVET EUROPEEN

(11) **EP 0 509 870 B1**
(45) Date de publication et mention de la délivrance du brevet: **21.06.1995**
(21) Numéro de dépôt: 92400898.0
(22) Date de dépôt: 31.03.1992
(51) Int. Cl.: B60T 7/08

(54) **Frein à main pour véhicule**
Handbremse für ein Fahrzeug
Hand brake for a vehicle

(30) Priorité: 15.04.1991 FR 9104587
(43) Date de publication de la demande: 21.10.1992
(73) Titulaire: ROCKWELL BODY AND CHASSIS SYSTEMS - FRANCE, en abrégé: ROCKWELL BCS - FRANCE, 92082 Paris La Défense 2 (FR)
(72) Inventeur: Noel, Jean-Pierre, F-88100 Saint-Die (FR); Gertsch, Bruno, F-88000 Epinal (FR)
(74) Mandataire: Martin, Jean-Paul

(56) Documents cités:
- EP-A- 0 178 084
- DE-C- 3 727 625
- US-A- 4 220 294

## Description

La présente invention a pour objet un frein à main de stationnement pour véhicule automobile, adapté pour être relié à un câble de freinage.

Ce frein est du type comprenant un secteur denté destiné à être fixé au plancher du véhicule , un cliquet adapté pour coopérer avec le secteur denté, et un levier creux manuel de préhension équipé d'une tige-poussoir intérieure, dont une extrémité coopère avec le cliquet pour maintenir des dents de verrouillage de ce dernier en prise avec le secteur denté sous la poussée de moyens élastiques, le cliquet étant articulé autour d'un axe intérieur au levier.

Les moyens élastiques peuvent être constitués par un ressort hélicoïdal positionné autour de la tige-poussoir et exerçant sur celle-ci une poussée dans le sens qui maintient les dents du cliquet engagées dans la denture du secteur. Un frein de ce type est décrit dans le document DE-C3727625.

Pour manoeuvrer ce frein, l'utilisateur fait basculer le levier jusqu'à sa nouvelle position. Durant cette opération de serrage du frein, le frottement des dents du cliquet sur la denture du secteur et leur encliquetage successif constituent une source de bruit indésirable.

L'invention a donc pour but de réaliser un frein de stationnement ne présentant pas cet inconvénient.

Suivant l'invention, Le frein à main est conforme à la partie caractérisante de la revendication 1.

Suivant un premier mode de réalisation de l'invention, cet organe est une dent supplémentaire faisant partie d'un revêtement plastique surmoulé sur un corps métallique du cliquet.

Suivant un second mode de réalisation, l'organe précité est une dent terminale d'une pièce intermédiaire entre le cliquet et le secteur denté, et librement articulée sur un axe transversal intérieur au levier de préhension, cette pièce intermédiaire permettant d'éloigner les dents du cliquet de la denture pendant les manoeuvres du levier.

Dans les deux cas, l'organe associé au cliquet permet d'éloigner les dents de ce dernier pendant les manoeuvres du levier. En effet, la dent supplémentaire (ou la pièce intermédiaire) grâce à son positionnement entre l'axe de rotation et les dents de verrouillage, peut rester en contact glissant avec la denture du secteur pendant le basculement du levier, tandis que les dents de verrouillage sont écartées de cette denture. De ce fait, en fin de course de serrage, la position de la dent supplémentaire détermine celle des dents de verrouillage qui viennent alors en prise avec la denture exactement à l'emplacement voulu par l'utilisateur.

Suivant un mode de réalisation de l'invention, la dent supplémentaire fait partie d'un revêtement en matière plastique surmoulé sur un corps métallique du cliquet.

Cette matière plastique est convenablement choisie de façon à présenter une résistance mécanique suffisante, une résistance à l'abrasion suffisante, et un faible coefficient de frottement. Une telle matière peut être par exemple un polyester élastomère.

L'invention sera maintenant décrite en référence au dessin annexé qui en illustre une forme de réalisation à titre d'exemple et non limitative.

La figure 1 est une vue en coupe longitudinale et élévation partielle d'une première forme de réalisation du frein à main de stationnement pour véhicule selon l'invention, en position de repos desserré.

La figure 2 est une vue en élévation latérale à échelle agrandie et avec arrachement du cliquet et du secteur denté du frein de la figure 1, le cliquet étant représenté dans la position qu'il occupe pendant le serrage du frein.

La figure 3 est une vue en coupe transversale suivant 3.3. de la figure 2.

La figure 4 est une vue analogue à la figure 2 montrant le cliquet en position verrouillée sur la denture du secteur.

La figure 5 est une vue en élévation partielle d'une seconde forme de réalisation de l'organe associé au cliquet et au secteur denté, montrant le cliquet verrouillé sur le secteur.

La figure 6 est une vue analogue à la figure 5, montrant le cliquet déverrouillé et. l'organe associé en position de glissement vers le secteur denté.

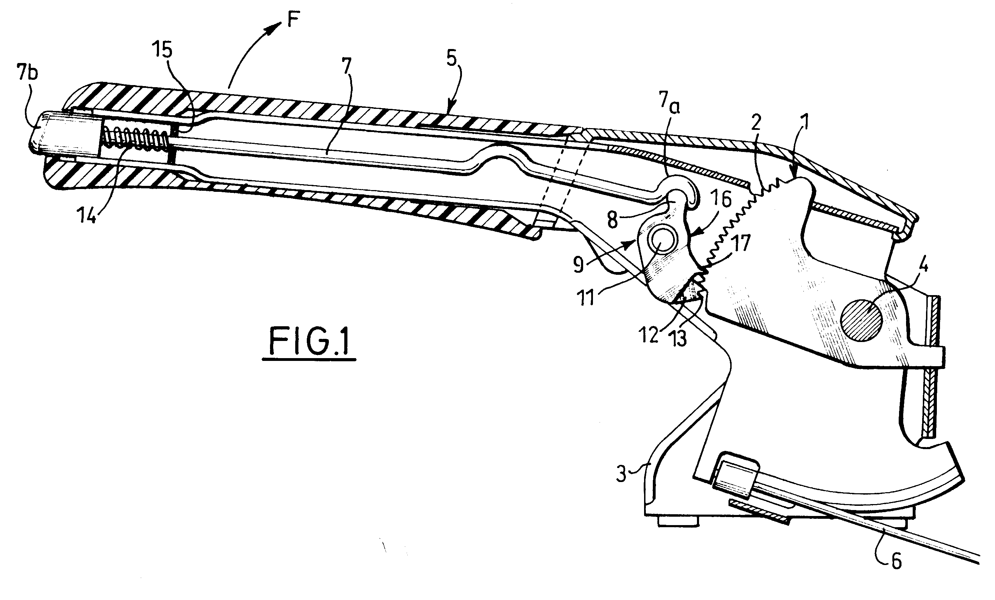

Le frein à main de stationnement pour véhicule automobile représenté à la figure 1 comprend un secteur denté (1) pourvu d'une denture (2) fixé au plancher (non représenté) du véhicule par un support (3), lequel ainsi que le secteur (1) sont traversés par un axe (4). Sur ce dernier, est articulé un levier manuel (5) de préhension, dont l'extrémité voisine de l'axe de rotation (4) est fixée à un câble (6) de freinage, de manière connue en soi.

Le levier (5) est creux et contient une tige-poussoir (7) intérieure dont une extrémité recourbée (7a) coopère avec un ergot (8) d'un cliquet (9) articulé rotativement autour d'un axe transversal (11) fixé aux parois du levier (5). Le cliquet (9) comporte un corps ou âme métallique (12), terminé à l'une de ses extrémités par des dents (13) de verrouillage du frein en position serrée, lorsque ces dents (13) sont en prise avec des dents de la denture (2).

La tige-poussoir (7) est munie d'un poussoir terminal (7b) saillant partiellement de l'extrémité du levier (5), et normalement maintenu dans cette position par des moyens élastiques, par exemple un ressort hélicoïdal (14) entourant la tige (7) et prenant appui sur un élément transversal (15) fixé aux parois du levier (5) et traversé par la tige (7). Dans cette position, représentée à la figure 1, le ressort (14) exerce donc sur la tige (7) une poussée dans la direction opposée au secteur (1), de telle sorte que la partie terminale (7a) exerce sur le cliquet (9) un couple tendant à maintenir les dents (13) appliquées contre le secteur (1), soit à l'extérieur de la denture (2) (figure 1) soit en prise avec celle-ci, c'est-à-dire en position de serrage du frein.

Le corps métallique (12) du cliquet (9) est recouvert, à l'exception de son extrémité portant les dents (13), d'un revêtement surmoulé (16) présentant une dent (17) positionnée du côté des dents (13), entre celles-ci et l'axe (11) de rotation du cliquet (9). Le revêtement est choisi en une matière à faible coefficient de frottement, résistante mécaniquement, et présentant de plus une résistance suffisante à l'abrasion, par exemple une matière plastique telle qu'un polyester élastomère.

Le fonctionnement du frein qui vient d'être décrit est le suivant.

Au repos, le frein desserré est dans la situation représentée à la figure 1, les dents (13) n'étant pas en prise avec la denture (2). En revanche, grâce à son dimensionnement et à son positionnement entre celles-ci et l'axe (11), la dent (17) est engagée dans la denture (2).

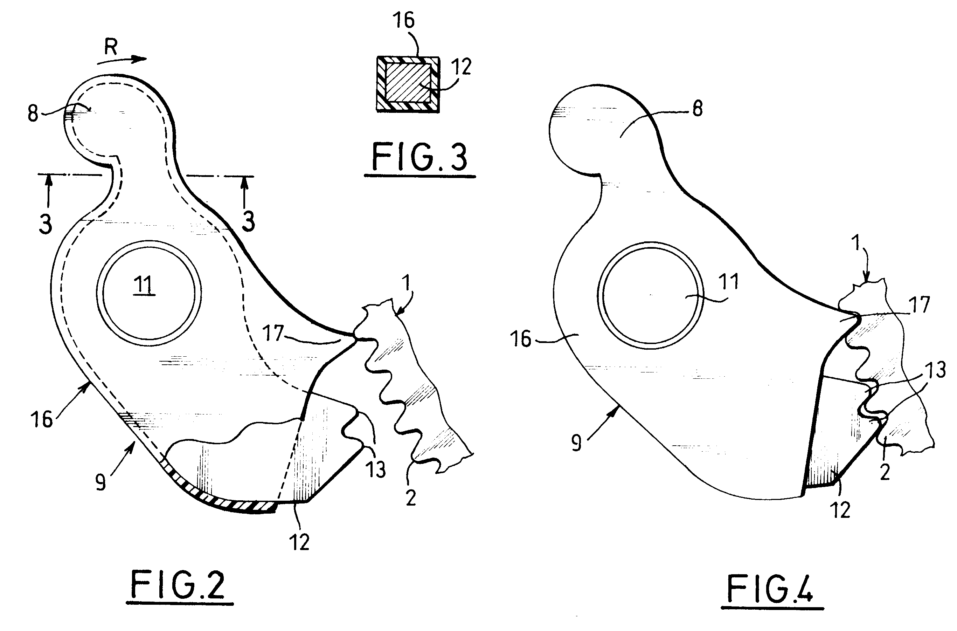

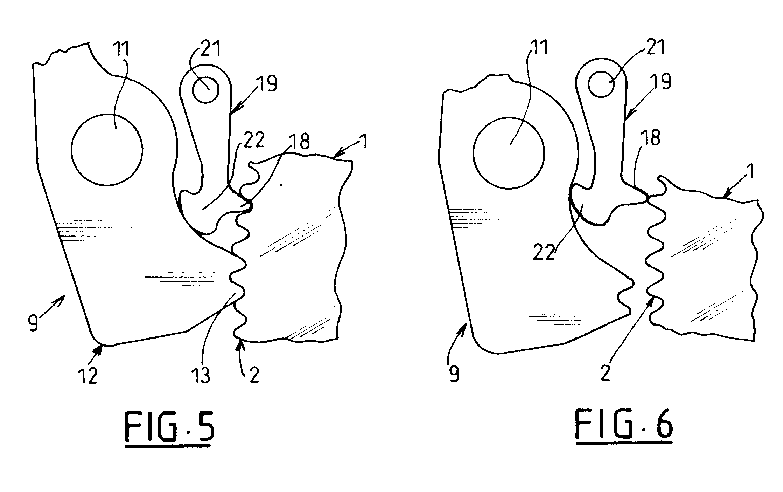

Lorsque l'utilisateur veut serrer le frein, il exerce une force transversale (F) sur le levier (5) de manière à le faire basculer vers le haut (7b). Pendant ce déplacement du levier (5), l'extrémité de la dent (17) reste en contact plissant avec les sommets des dents de la denture (2), et de ce fait maintient les dents (13) écartées de la denture (2) (figure 2). En fin de rotation du levier (5), le relâchement de la force exercée sur celui-ci par l'utilisateur entraîne l'engrènement de la dent (17) avec la denture (2), et corrélativement, celui des dents (13) avec la denture (2), en position verrouillée du frein (figure 4).

Grâce à la réalisation de la dent (17) en une matière plastique convenablement choisie comme expliqué ci-dessus, son glissement sur la denture (2) s'exécute sans bruit. De plus, en fin de course de serrage, la dent revient en prise avec la denture (2) exactement dans la position choisie par l'utilisateur, de même par conséquent que les dents (13).

Le cliquet (9) maintient le frein verrouillé dans la position choisie pour le levier (5), et les efforts dus à la tension du câble (6) sont encaissés par la partie métallique constituée par le corps (12), la dent plastique (17) n'étant pas en appui sur la denture (2), bien qu'engagée entre deux dents de celle-ci (figure 4). Dans le second mode de réalisation représenté aux figures 5 et 6, le cliquet (9) n'est pas muni d'un revêtement surmoulé, et l'organe qui lui est associé est une dent terminale (18) d'une pièce (19) intermédiaire entre le cliquet (9) et le secteur denté (1). Cette pièce intermédiaire (19), réalisée en une matière plastique telle que celle prévue pour le revêtement surmoulé (16), est librement articulée, par son extrémité opposée à la dent (18), sur un axe (21) transversal, intérieur au levier (5) de préhension.
La pièce (19) comporte en outre, à son extrémité portant la dent (18), un bossage (22) ménagé à l'opposé de la dent, et en appui sur le cliquet (9) pendant les manoeuvres du levier (5).
La dent (18) et le bossage (22) sont positionnés comme la dent (17) de la réalisation précédente, entre les dents (13) de verrouillage du cliquet (9) et son axe (11) de rotation. En position de verrouillage des dents (13) dans la denture (2) (figure 5), la dent (18) est engagée dans cette denture (2), et le bossage (22) en appui sur le cliquet (9).

Pendant une manoeuvre du levier (5) (figure 6) les dents (13) sont écartées de la denture (2) et maintenues dans cette position par le bossage (22) de la pièce (19), dont la dent (18) glisse sur les dents de la denture (2). Lorsque l'utilisateur relâche le levier (5), les dents (13) reviennent en prise avec la structure (2) et la pièce (19) reprend sa position de la figure 5.

Les avantages de ce second mode de réalisation sont les mêmes que ceux du premier mode, décrit en référence aux figures 1 à 4.

## Revendications

1. Frein à main de stationnement pour véhicule adapté pour être relié à un câble (6) de freinage, comprenant un secteur denté (1) destiné à être fixé au plancher du véhicule, un cliquet (9) adapté pour coopérer avec le secteur denté, et un levier creux manuel (5) de préhension équipé d'une tige-poussoir (7) intérieure, dont une extrémité (7a) coopère avec le cliquet pour maintenir des dents (13) de verrouillage de ce dernier en prise avec le secteur denté (1) sous la poussée de moyens élastiques (14), le cliquet étant articulé autour d'un axe (11) intérieur au levier, caractérisé en ce que le cliquet (9) coopère avec un organe (17), agencé entre ses dents (13) de verrouillage et son axe (11) de rotation, et dimensionné pour glisser sur la denture (2) du secteur (1) pendant les manoeuvres du levier de préhension, tandis que les dents (13) de verrouillage sont alors écartées de cette denture (2) par l'organe précité (17), lequel est réalisé en une matière plastique convenablement choisie de manière à glisser sans bruit sur la denture.

2. Frein selon la revendication 1, caractérisé en ce que l'organe précité est une dent supplémentaire (17), faisant partie d'un revêtement plastique surmoulé sur un corps métallique (12) du cliquet (9).

3. Frein selon la revendication 1, caractérisé en ce que ledit organe est une dent terminale (18) d'une pièce (19) intermédiaire entre le cliquet (11) et le secteur denté (1), et librement articulée sur un axe transversal (21) intérieur au levier de préhension (5).

4. Frein selon la revendication 3, caractérisé en ce que l'extrémité de la dite pièce (19) portant la dent terminale (18) comporte également un bossage (22) en appui sur le cliquet (9), qui maintient les dents (13) du cliquet (9) éloignées de la denture (2) pendant les manoeuvres du levier (5).

## Claims

1. A vehicle-parking handbrake suitable for connection to a braking cable (6), comprising a toothed section (1) adapted to be fixed to the floor of the vehicle, a ratchet (9) adapted to cooperate with the toothed section, and a hand-operated hollow gripping lever (5) provided with an inner push rod (7), one end (7a) of which cooperates with the ratchet in order to keep locking teeth (13) of the latter engaged with the toothed section (1) under the thrust of resilient means (14), the ratchet being hinged about an axis (11) inside the lever, characterised in that the ratchet (9) cooperates with a member (17) arranged between its locking teeth (13) and its axis of rotation (11) and dimensioned for sliding over the teeth (2) of the section (1) during the operation of the gripping lever, while the locking teeth (13) are then separated from said teeth (2) by the aforementioned member (17) which is made of a suitably chosen plastic material, so that it glides noiselessly over the teeth.

2. A brake according to claim 1, characterised in that the aforementioned member is an additional tooth (17) and is part of a plastic covering moulded onto a metal body (12) of the ratchet (9).

3. A brake according to claim 1, characterised in that said member is an end tooth (18) of a piece (19) interposed between the ratchet (11) and the toothed section (1) and freely hinged about a transverse axis (21) inside the gripping lever (5).

4. A brake according to claim 3, characterised in that the end of said piece (19) carrying the end tooth (18) also comprises a projection (22) resting on the ratchet (9), which keeps the teeth (13) of the ratchet (9) separated from the teeth (2) during the operation of the lever (5).

## Patentansprüche

1. Handbremse zum Parken für ein Fahrzeug, dazu ausgelegt, daß es mit einem Bremsseil (6) verbunden ist, mit einem gezahnten Ausschnitt (1), der dazu bestimmt ist, an dem Boden des Fahrzeuges befestigt zu werden, einer Sperrklinke (9), die dazu ausgelegt ist, mit dem gezahnten Ausschnitt zusammenzuwirken und einem hohlen Handgreifhebel (5), der mit einer inneren Schubstange (7) ausgestattet ist, deren eines Ende (7a) mit der Sperrklinke zusammenwirkt, um die Verriegelungszähne (13) der letzteren im Eingriff mit dem gezahnten Ausschnitt (1) unter der Schubkraft von elastischen Mitteln (14) zu halten, wobei die Sperrklinke um eine innere Achse (11) des Hebels gedreht wird, dadurch gekennzeichnet, daß die Sperrklinke (9) mit einem Element (17) zusammenwirkt, das zwischen ihren Verriegelungszähnen (13) und ihrer Drehachse (11) angeordnet ist und so bemessen ist, daß es auf der Zahnung des Ausschnittes (1) während der Handhabungen des Greifhebels gleitet, während die Verriegelungszähne (13) durch das vorgenannte Element (17) dann von dieser Zahnung (2) beabstandet sind, wobei das Element aus einem Kunststoff hergestellt ist, der zweckmäßigerweise so gewählt ist, daß es ohne Geräusch auf der Zahnung gleitet.

2. Bremse nach Anspruch 1, dadurch gekennzeichnet, daß das vorgenannte Element ein zusätzlicher Zahn (17) ist, der einen Teil eines Kunststoffüberzuges bildet, der auf einen metallischen Körper (12) der Sperrklinke (9) aufgeformt ist.

3. Bremse nach Anspruch 1, dadurch gekennzeichnet, daß das Element ein endseitiger Zahn (18) eines zwischengeschalteten Stückes (19) zwischen der Sperrklinke (11) und dem gezahnten Abschnitt (1) ist und frei auf einer inneren Querachse (21) des Greifhebels (5) drehbar ist.

4. Bremse nach Anspruch 3, dadurch gekennzeichnet, daß das Ende des Stückes (19), das den endseitigen Zahn (18) trägt, gleichermaßen einen Höcker (22) in Anlage auf der Schaltklinke (9) aufweist, der die Zähne (13) der Sperrklinke (9) während der Handhabungen des Hebels (5) fern von der Zahnung (2) hält.
